# EUROPÄISCHE PATENTANMELDUNG

(11) **EP 4 339 549 A1**
(43) Veröffentlichungstag der Anmeldung: **20.03.2024**
(21) Anmeldenummer: 23194154.3
(22) Anmeldetag: 30.08.2023
(51) Int. Cl.: F41G 3/26, F41G 1/387, F41G 3/04, F41G 3/16, F41G 11/00, G03B 17/17, G03B 17/54, G03B 21/28, G03B 29/00, G02B 13/00

(54) **INFORMATIONSVORRICHTUNG ZUR BEFESTIGUNG AN EINER OPTIKEINRICHTUNG**

(30) Priorität: 05.09.2022 DE 202022104987 U
(71) Anmelder: Kilic, Michael Ali, 97525 Schwebheim (DE)
(72) Erfinder: Kilic, Michael Ali, 97525 Schwebheim (DE)
(74) Vertreter: advotec.

(57) **Zusammenfassung**

Die Erfindung betrifft eine Informationsvorrichtung (01) zur Befestigung am Okulartubus (02) einer Optikeinrichtung (03), insbesondere eines Zielfernrohrs, eines Fernrohrs oder eines Teleskops, umfassend zumindest ein Kameramodul (04) zur Aufnahme eines aus der optischen Achse (18) der Optikeinrichtung (03) umgelenkten Bildes und ein Montagemodul (05) zur Befestigung der Informationsvorrichtung (01) am Okulartubus (02), umfassend ein Projektionsmodul (06) zur Ausgabe eines Informationsbildes, ein Steuerungsmodul (07), das dazu eingerichtet ist, zumindest die Ausgabe des Projektionsmoduls (06) zu steuern, und ein Umlenkmodul (08) mit einer in einem Gehäuse (09) angeordneten Umlenkeinrichtung (10) zur Umlenkung des Bildes aus der optischen Achse (18) der Optikeinrichtung (03) und zur Umlenkung des Informationsbildes des Projektionsmoduls (06) in die optische Achse (18) der Optikeinrichtung (03), wobei die Umlenkeinrichtung (10) zur Umlenkung halbdurchlässig so ausgebildet und angeordnet ist, dass bei auf die Optikeinrichtung (03) aufgesetzter Informationsvorrichtung (01) der Durchblick durch die Optikeinrichtung (03), die Aufnahme eines Bildes und/oder die Betrachtung des Informationsbildes ermöglicht ist. Des Weiteren betrifft die Erfindung eine Kontrollvorrichtung (100) zur Fernüberwachung zumindest einer Informationsvorrichtung (01) sowie ein Überwachungssystem umfassend zumindest eine Informationsvorrichtung (01).

## Beschreibung

Die Erfindung betrifft eine Informationsvorrichtung zur Befestigung am Okulartubus einer Optikeinrichtung, insbesondere eines Zielfernrohrs, eines Fernrohrs oder eines Teleskops, nach dem Oberbegriff des Anspruchs 1. Ferner betrifft die Erfindung eine Kontrollvorrichtung zur Fernüberwachung einer erfindungsgemäßen Informationsvorrichtung.

Aus dem Stand der Technik sind Kameraeinrichtungen bekannt, die vorzugsweise, jedoch keineswegs ausschließlich, zur Dokumentation, Beweissicherung und Überwachung dienen. So können beispielsweise im jagdlichen Bereich die Situationen während und nach einem Schuss aufgezeichnet und als Bild oder Video zur Erinnerung verwendet werden. Insbesondere im militärischen und polizeilichen Bereich sowie bei Sicherheitskräften kann eine derartige Dokumentation von Schießsituationen von erheblicher Bedeutung beispielsweise zur Beweissicherung sein. Auch zur Schützenausbildung können derartige Systeme Verwendung finden, das heißt durch nachträgliche Kontrolle der aufgenommenen Bilder ober aber durch Übertragung der aufgenommenen Bilder in Echtzeit an einen Ausbilder.

Aus dem Stand der Technik sind Vorrichtungen bekannt, bei denen eine Bilderfassung außerhalb eines Zielfernrohrs parallel zu dessen optischer Achse erfolgt. Dabei zeigt die Einrichtung zur Bilderfassung jedoch ein parallelachsverschobenes Bild, dessen Genauigkeit, insbesondere wenn auf unterschiedliche Entfernungen geschossen wird, dann regelmäßig ungenügend ist. Insbesondere wenn die Einrichtung zur Bilderfassung an einem Zielfernrohr befestigt ist, wird zudem die Zielerfassung durch Einschränkung der Sicht des Schützen behindert. Ein weiterer Nachteil bekannter Bilderfassungssysteme ist, dass die Anordnung an einer Waffe bzw. einem Zielfernrohr komplex ist und eine aufwändige Justierung erfordert. Erfolgt nach dem Abnehmen der Einrichtung eine erneute Montage, wird eine abermalige Justierung erforderlich.

Weiter ist es nachteilig an bekannten Kameraeinrichtungen, dass dem Schützen zusätzlich zur Verfügung stehende Informationen nicht von der Kamera erfasst und/oder dem Schützen nicht in dessen Sichtbereich angezeigt werden können. Insofern die Zusatzinformationen, wie beispielsweise Windgeschwindigkeit oder Entfernung zum Ziel, nicht von der Kamera gattungsgemäßer Kameraeinrichtungen erfasst werden, ist auch keine umfassende Dokumentation möglich.

Ausgehend von diesem Stand der Technik ist es die Aufgabe der vorliegenden Erfindung, eine Informationsvorrichtung zur Befestigung am Okulartubus einer Optikeinrichtung, insbesondere eines Zielfernrohrs, eines Fernrohrs oder eines Teleskops, zu schaffen, die die Zielerfassung des Anwenders nicht beeinträchtigt, dem Anwender Zusatzinformationen bereitstellen kann und eine umfassende Dokumentation gewährleistet.

Die Aufgabe wird durch eine Informationsvorrichtung nach der Lehre des Anspruchs 1 gelöst. Ferner wird eine Kontrollvorrichtung mit einer solchen Informationsvorrichtung vorgeschlagen.

Vorteilhafte Ausführungsformen der Erfindung sind Gegenstand der abhängigen Ansprüche. In den Rahmen der Erfindung fallen zudem sämtliche Kombinationen aus mindestens zwei in der Beschreibung, den Ansprüchen und/oder den Figuren offenbarten Merkmalen. Es versteht sich, dass die zu der Vorrichtung gemachten Ausführungen sich in äquivalenter Weise auf die erfindungsgemäße Kontrollvorrichtung beziehen, ohne für diese separat genannt zu werden. Hierbei versteht es sich insbesondere, dass sprachübliche Umformulierungen und/oder ein sinngemäßes Ersetzen von jeweiligen Begrifflichkeiten im Rahmen der üblichen sprachlichen Praxis, insbesondere das Verwenden von durch die allgemein anerkannte Sprachliteratur gestützten Synonymen, von dem vorliegenden Offenbarungsgehalt umfasst sind, ohne in ihrer jeweiligen Ausformulierung explizit erwähnt zu werden.

Die Informationsvorrichtung gemäß der Erfindung ist zur Befestigung am Okulartubus einer Optikeinrichtung vorgesehen. Diese Optikeinrichtung kann insbesondere ein Zielfernrohr, ein Fernrohr, ein Teleskop, ein Nachtsichtgerät oder ein Wärmebildgerät sein. Wenn nachfolgend die Erfindung anhand des Beispiels eines Zielfernrohrs erläutert wird, soll dies keine Einschränkung auf diese Art einer Optikeinrichtung bedeuten.

Erfindungsgemäß weist die Informationsvorrichtung ein Kameramodul, ein Montagemodul, ein Projektionsmodul, ein Steuerungsmodul und ein Umlenkmodul auf. Das Montagemodul dient dabei zunächst im Wesentlichen zur Befestigung des Kameramoduls am Okulartubus. Das Kameramodul dient der Aufnahme eines aus der optischen Achse der Optikeinrichtung umgelenkten Bildes. Das Projektionsmodul ist vorgesehen, um ein Bild mit Zusatzinformationen, das im Rahmen der Erfindung auch als Informationsbild bezeichnet ist und das in die Optikeinrichtung projiziert oder eingespeist werden kann, bereitzustellen, so dass es dem Nutzer bei Durchblick durch die Optikeinrichtung zur Verfügung steht bzw. für diesen sichtbar ist. Eine Projektionseinrichtung des Projektionsmoduls zur Ausgabe und/oder Weitergabe eines Informationsbildes kann beispielsweise in der Art eines Displays oder Projektors ausgebildet sein. Das Steuerungsmodul der Informationsvorrichtung ist dazu eingerichtet, zumindest die Anzeige des Projektionsmoduls, insbesondere den Inhalt der Anzeige, das heißt welche Zusatzinformationen, beispielsweise betreffend Windgeschwindigkeit oder Entfernung, angezeigt werden sollen, zu steuern. Es ist denkbar, dass das Steuerungsmodul in das Projektionsmodul integriert ist. Das Umlenkmodul ist mit einer in einem Gehäuse angeordneten Umlenkeinrichtung zur Umlenkung des Bildes aus der optischen Achse der Optikeinrichtung sowie zur Umlenkung des Informationsbildes des Projektionsmoduls in die optische Achse der Optikeinrichtung versehen, wobei die Umlenkeinrichtung zur Umlenkung halbdurchlässig ausgebildet und derart angeordnet ist, dass bei auf die Optikeinrichtung aufgesetzter Informationsvorrichtung der Durchblick durch die Optikeinrichtung, die Aufnahme eines Bildes und/oder die Betrachtung des Informationsbildes bei Durchblick durch die Optikeinrichtung möglich ist. Ferner ist es erfindungsgemäß vorgesehen, dass das mit dem Kameramodul erfassbare, aus der optischen Achse der Optikeinrichtung umgelenkte Bild bevorzugt exakt dem Bild entspricht, das der Schütze bei Durchblick durch die Optikeinrichtung sieht, weshalb auch die durch das Projektionsmodul eingespeisten Zusatzinformationen mittels des Kameramoduls erfasst werden können.

Die erfindungsgemäße Gestaltung der Informationsvorrichtung lässt es vorteilhafterweise zu, dass bei auf dem Okulartubus eines Zielfernrohrs aufgesetzter Informationsvorrichtung das Zielfernrohr aufgrund der Halbdurchlässigkeit der Umlenkeinrichtung zum einen uneingeschränkt weiterverwendbar ist und zum anderen dem Nutzer Zusatzinformationen bereitgestellt werden, die das durch das Zielfernrohr sichtbare Bild überlagern, so dass diese Zusatzinformationen nutzbar sind, ohne den Blick vom Zielfernrohr zu nehmen. Zu Dokumentations- oder Schulungszwecken kann mittels des Kameramoduls das bei Durchblick durch die Optikeinrichtung für den Anwender sichtbare Bild, bevorzugt exakt das Bild, das der Schütze bei Durchsicht durch Informationsvorrichtung und Zielfernrohr, insbesondere inklusive der durch das Projektionsmodul bereitgestellten Zusatzinformationen, aufgenommen werden. Durch das erfindungsgemäße Montagemodul lässt sich die Informationsvorrichtung wiederholgenau, ohne wesentliche Einschränkung der Genauigkeit, am Okular der Optikeinrichtung befestigen.

Die Erfindung lässt sich insbesondere zu folgenden Zwecken verwenden:
- Aufzeichnung von Jagdszenen auf Video und auf Fotos einschließlich der Aufzeichnung von Zusatzinformationen, wie beispielsweise Entfernung, Uhrzeit, Datum oder örtlicher Position;
- Aufzeichnung der mit dem Zielfernrohr beobachteten Flora und Fauna einschließlich der Aufzeichnung von Zusatzinformationen, wie beispielsweise Temperatur, Uhrzeit, Datum oder örtlicher Position;
- Gewährleistung, dass die verantwortlichen Leiter bei Operationen der Sicherheitseinheiten die Operationen zeitgleich überwachen und Zusatzinformationen beispielsweise in Form von Anweisungen bereitstellen können;
- Aufzeichnung der Überwachung, insbesondere bei Schießvorgängen, zur Sicherung von Beweisen; oder
- Fehlerreduzierung und Zeitgewinn bei der Schützenausbildung, indem die Erfindung gewährleistet, dass die Ausbilder und Schüler die Schüsse zeitgleich sehen und Schüler und Lehrer miteinander kommunizieren können.

Mit der erfindungsgemäßen Vorrichtung ist es auf einfache Art und Weise möglich, einem Anwender der Informationsvorrichtung beliebige Informationen zur Verfügung zu stellen und diese zusammen mit dem Bild, das in den Okulartubus fällt, aufzuzeichnen, ohne dass dieser den Blick von der Optikeinrichung nehmen muss. Dazu empfängt die Informationsvorrichtung in einem ersten Schritt Daten mit Zusatzinformationen, verarbeitet diese anschließend und erstellt mit dem Steuermodul eine Ausgabe für das Projektionsmodul, die das Projektionsmodul als Informationsbild ausgibt. Das Projektionsbild wird in der Umlenkeinrichtung derart umgelenkt, dass es vom Kameramodul erfasst werden kann und gleichzeitig das in den Okulartubus eintretende Bild überlagert. Das von der Kamera erfasste Bild kann in einem weiteren Schritt gespeichert oder in Form von Bilddaten übertragen werden.

Als vorteilhaft hat es sich erwiesen, wenn das Montagemodul, das Umlenkmodul, das Projektionsmodul, das Steuerungsmodul und/oder das Kameramodul lösbar miteinander verbunden sind. Aufgrund der Lösbarkeit der Module kann das Montagemodul an der Optikeinrichtung verbleiben, während die anderen Module abgenommen und/oder ausgetauscht werden können. Zudem lassen sich die anderen Module, wie Umlenkmodul, Projektionsmodul, Steuerungsmodul und/oder Kameramodul, in einfacher Art und Weise erneut am Montagemodul befestigen, ohne dass eine erneute Justierung der Module gegenüber dem Okulartubus der Optikeinrichtung notwendig wird, da die Justierung gegenüber dem Okulartubus allein über das Montagemodul erfolgen kann.

Um auf einfache Art und Weise eine ausreichende Befestigung, insbesondere eine die Rückstoßkräfte beim Schuss aufnehmende Befestigung, der Informationsvorrichtung am Okulartubus vornehmen zu können, weist das Montagemodul einen doppelschaligen Aufbau mit zwei Montageschalen auf, wobei zwischen den beiden Montageschalen ein im Wesentlichen der Außenkontur des Okulartubus entsprechender, in der Regel mehr oder weniger zylindrischer Raum gebildet wird. Dabei sind beide Montageschalen mittels einer Klemmeinrichtung, die den Okulartubus zumindest abschnittsweise kraft- und/oder formschlüssig umschließt, gegeneinander klemmbar. Somit sind am Okulartubus keinerlei Befestigungselemente, wie zum Beispiel ein Außengewinde, notwendig, so dass das Montagemodul für eine Vielzahl von Optikeinrichtungen, insbesondere Zielfernrohren, mit einem bestimmten Außendurchmesser oder Außendurchmesserbereich Verwendung finden kann und zerstörungsfrei am Okulartubus anbringbar ist. Weicht der Außendurchmesser des Okulartubus vom zugelassenen Durchmesserbereich ab, können bei kleineren Außendurchmessern beispielsweise Einlegestreifen oder Einlegeschalen in den Montageschalen Verwendung finden, die den freien Klemmdurchmesser verringern. In der Regel wird jedoch eine Montageschale mit für eine bestimmte Optikeinrichtung angepasstem Klemmdurchmesser verwendet, so dass die Montageschale gleichzeitig die Funktion eines Adapters aufweist.

Zur Befestigung des Umlenkmoduls am Montagemodul kann das Montagemodul im Bereich seines zum Umlenkmodul weisenden Endes einen Befestigungsring mit einer Befestigungseinrichtung zur lösbaren Befestigung des Umlenkmoduls aufweisen. Dabei kann dieser Befestigungsring auf seiner zur Optikeinrichtung, also bevorzugt zum Zielfernrohr, weisenden Seite eine Anschlagfläche zur mittelbaren oder unmittelbaren Anlage des stirnseitigen Endes des Okulartubus aufweisen. Diese Anschlagfläche stellt dabei sicher, dass die gesamte Informationsvorrichtung in Achsrichtung des Zielfernrohrs in definierter Position angeordnet werden kann. Vorzugsweise kann die Anschlagfläche zumindest geringfügig konisch ausgebildet sein, das heißt einen Konus bilden, der sich in Richtung zur Optikeinrichtung hin verjüngt. In Verbindung mit dem kragenseitigen Ende des Okulartubus, der dann auf dem Konus aufsitzt, ergibt sich eine selbsttätige Zentrierung des Montagemoduls und damit der gesamten Informationsvorrichtung auf dem Okulartubus bezüglich der optischen Achse des Zielfernrohrs. Dadurch lässt sich die Genauigkeit weiter erhöhen.

Weiter kann zwischen dem stirnseitigen Ende des Okulartubus und der Anschlagfläche ein Zentrierring angeordnet sein, der zumindest auf seiner zum Okular weisenden Seite zumindest geringfügig konisch ausgebildet ist. Dabei kann auf eine konische Gestaltung der Anschlagfläche verzichtet werden. Es ist jedoch ebenfalls möglich, dass die Anschlagfläche, wie vorstehend erläutert, konisch ausgebildet ist und der Zentrierring doppelt konisch, das heißt auf beiden Seiten konisch, ausgebildet ist. Dadurch erfolgt sowohl eine Zentrierung des Zentrierrings im Montagemodul als auch eine Zentrierung des Montagemoduls bezüglich der optischen Achse des Zielfernrohrs.

Es ist denkbar, dass der Befestigungsring separat ausgebildet und an einer der beiden Montageschalen befestigt ist. Bevorzugt ist der Befestigungsring jedoch einstückig an eine erste der beiden Montageschalen angeformt. Die zweite der beiden Montageschalen ist bevorzugt kürzer als die erste Montageschale ausgebildet und endet in einem Abstand vom Befestigungsring. Dadurch wird im Montagemodul ein Fenster ausgebildet, durch das sich auch bei aufgesetztem Montagemodul beispielsweise eine gegebenenfalls am Okulartubus vorhandene Dioptrieneinstellung betätigen lässt, um eine Fehlsichtigkeit eines Schützen auszugleichen. Zur einfachen Klemmung des Montagemoduls am Okulartubus weist die Klemmeinrichtung mindestens eine Klemmschraube auf, die eine der beiden Montageschalen randseitig in einer Ausnehmung durchgreift und in ein ebenfalls randseitig in der anderen der beiden Montageschalen ausgebildetes Innengewinde eingreift. Bevorzugt werden zwei oder vier Klemmschrauben bezüglich der Anordnung der optischen Achse des Zielfernrohrs verwendet, um zum einen eine sichere Befestigung zu gewährleisten und zum anderen einen Verzug des Okulartubus möglichst auszuschließen.

Die Befestigungseinrichtung zur Befestigung des Umlenkmoduls am Montagemodul ist bevorzugt nach Art eines Bajonettverschlusses ausgebildet und weist mindestens zwei Verriegelungsausnehmungen auf, in denen jeweils dazu form- und/oder funktionskomplementäre, am Gehäuse des Umlenkmoduls angeordnete Verriegelungswarzen durch eine Steck-Dreh-Bewegung in lösbaren Eingriff bringbar sind. Dadurch lässt sich zum einen die Verbindung zwischen dem am Okulartubus verbleibenden Montagemodul in einfacher Weise lösen und wiederherstellen, und zum anderen befindet sich die Informationsvorrichtung nach dem Aufsetzen in genau definierter Position. Besonders bevorzugt sind mindestens vier Verriegelungsausnehmungen in der Befestigungseinrichtung vorgesehen. Dadurch ergibt sich bei entsprechender Anordnung von zwei oder ebenfalls vier oder mehr Verriegelungswarzen am Gehäuse des Umlenkmoduls eine Befestigungsmöglichkeit in den unterschiedlichen festgelegten Drehpositionen.

Um ein unbeabsichtigtes Lösen des Umlenkmoduls vom Montagemodul zu verhindern, kann eine Arretiervorrichtung am Befestigungsring vorgesehen sein. Vorzugsweise weist dabei die Arretiervorrichtung einen federgelagerten Sicherheitsriegel auf, der in einer Ausnehmung des Befestigungsrings verschieblich gelagert ist. Dabei ist der Sicherheitsriegel über ein Betätigungselement aus einer ersten Position, in der ein Verdrehen des Umlenkmoduls gegenüber dem Montagemodul blockiert ist, in eine zweite Position, in der das Umlenkmodul und das Montagemodul gegeneinander verdrehbar und damit lösbar sind, überführbar. Um eine leichte Betätigung des Sicherheitsriegels in unterschiedlichen Drehpositionen sicherzustellen, kann der Befestigungsring in Umfangsrichtung beabstandet mindestens zwei unterschiedlich angeordnete Ausnehmungen aufweisen, in welchen dann wahlweise der mit einer Federkraft beaufschlagte Sicherheitsriegel und das Betätigungselement montiert werden können. Vorzugsweise liegen zwei Ausnehmungen einander bezüglich der Achse des Zielfernrohrs diametral gegenüber.

Die Informationsvorrichtung kann ein Datenmodul zur Verarbeitung, zur Speicherung und/oder zum Austausch von Daten, insbesondere von Daten des Kameramoduls, umfassen. Bevorzugt ist das Datenmodul zur Übertragung von Daten über geringe Distanzen, beispielsweise Distanzen bis zu 25 m, eingerichtet. Es ist denkbar, dass das Datenmodul in das Steuerungsmodul oder das Kameramodul integriert ist. Des Weiteren ist das Datenmodul dazu eingerichtet, eine Verbindung zu einer Mehrzahl an weiteren Geräten aufzubauen, um Daten an diese Mehrzahl weiterer Geräte, wie beispielsweise räumlich entfernte Kontrollvorrichtungen, zu übermitteln. Zur Datenaustausch ist vorteilhafterweise eine Antenne umfasst. Bevorzugt überträgt das Datenmodul Daten des Kameramoduls, noch weiter bevorzugt Bilddaten, die das für den Schützen im Okular des Zielfernrohrs sichtbare Bild widerspiegeln bzw. enthalten. Zudem ist es denkbar, dass das Datenmodul Daten empfängt und an das Steuerungsmodul weiterleitet. Beispielsweise können von einem entfernten weiteren Gerät Daten, wie Chatnachrichten oder Zusatzinformationen, empfangen werden, im Steuerungsmodul verarbeitet und über das Projektionsmodul dem Anwender im Sichtbereich des Okulars zur Verfügung gestellt werden. Das Datenmodul kann dazu eingerichtet sein, diskontinuierlich oder kontinuierlich Daten zu empfangen und/oder zu senden. Somit kann eine Liveübertragung über einen längeren Zeitraum, beispielsweise ein Livestreaming, erfolgen, sofern die Kamera kontinuierlich aufzeichnet und das Datenmodul kontinuierlich sendet, oder aber es kann, beispielsweise bei unzureichender Übertragungsgeschwindigkeit, nur ein einzelnes Bild in regelmäßigen Abständen aufgenommen und/oder übertragen werden.

Weiter kann das Datenmodul zur Speicherung von Daten eingerichtet sein. Dabei können Einzelbilder oder Videos aufgezeichnet und gegebenenfalls bereits aus den RAW-Daten in JPEGs vorverarbeitet werden. Die Speicherung kann auf internen RAMs erfolgen, die anschließend ausgelesen werden können, oder aber auf Wechselspeichern, insbesondere SD- oder micro-SD-Karten. Das Auslesen kann über genormte Schnittstellen, insbesondere USB, erfolgen. Ebenso ist eine drahtlose Übertragung über beispielsweise Bluetooth, WLAN oder eine GSM-Schnittstelle zeitversetzt oder in Echtzeit möglich.

Vorteilhafterweise kann das Datenmodul zur drahtlosen Übertragung von Daten ausgebildet sein. Insbesondere bei einer Datenübertragung mit einer relativ geringen Reichweite, beispielsweise bis zu 25 m, hat es sich als vorteilhaft erwiesen, die Daten drahtlos über ein lokales Netzwerk, bevorzugt ein WLAN (Wireless Local Area Network) oder ein WPAN (Wireless Personal Area Network), zu übertragen. Hierzu weist das Datenmodul bevorzugt eine WLAN-Adaptereinheit auf, um auf ein WLAN zugreifen zu können und über dieses Daten austauschen zu können.

Um einen Datenaustausch über größere Entfernungen zu ermöglichen, kann ein Reichweitenvergrößerungsmodul umfasst sein, mittels dessen die Übertragungsreichweite vergrößerbar ist. Mittels des Reichweitenvergrößerungsmoduls ist eine Datenübertragung über zumindest 100 m bis zu 25 km möglich. Die Datenübertragung mittels des Reichweitenvergrößerungsmoduls erfolgt mittels Radiowellen, Satellit oder nach dem Mobilfunkstandard 4G (LTE) und 5G. Auch ist es denkbar, dass mittels des Datenmoduls und/oder des Reichweitenvergrößerungsmoduls eine Internetverbindung hergestellt werden kann und Daten, bevorzugt verschlüsselt, über das Internet übertragbar sind.

Zur Kommunikation des Anwenders mit einer oder mehreren weiteren Personen oder zur Ausgabe von akustischen Hinweisen kann die Informationsvorrichtung eine Toneingabeeinrichtung und/oder eine Tonausgabeeinrichtung umfassen. Bevorzugt umfasst die Informationsvorrichtung eine Toneingabeeinrichtung und eine Tonausgabeeinrichtung. Weiter bevorzugt ist die Toneingabeeinrichtung als Mikrofon oder Mikrofoneingang ausgebildet und die Tonausgabeeinrichtung als Kopfhörerausgang ausgebildet. Insbesondere zur Verwendung im Bereich von Sicherheitskräften kann das Datenmodul, insbesondere eine Mobilfunkeinrichtung des Datenmoduls, auch zur bidirektionalen Kommunikation mit beispielsweise einer Einsatzleitung verwendet werden. Zur bidirektionalen Kommunikation ist vorteilhafterweise ein Lautsprecher oder eine Schnittstelle zum Anschluss eines Kopf- oder Ohrhörers sowie eine Toneingabevorrichtung vorgesehen.

Gemäß einer vorteilhaften Ausführungsform umfasst die Informationsvorrichtung einen Beschleunigungssensor und/oder ein Gyroskop und/oder einen Positionssensor, um eine möglichst genaue Dokumentation, insbesondere Ortung der Informationsvorrichtung, zu ermöglichen. Bevorzugt ist der Positionssensor als GPS-Empfänger (Global Positioning System) ausgebildet.

Nach einer besonders bevorzugten Ausgestaltung der Erfindung weist das Gehäuse des Umlenkmoduls vier Gehäuseöffnungen, nämlich eine erste Gehäuseöffnung, eine zweite Gehäuseöffnung, eine dritte Gehäuseöffnung und eine vierte Gehäuseöffnung, auf. Dabei liegen die erste Gehäuseöffnung und die zweite Gehäuseöffnung in Richtung der optischen Achse des Zielfernrohrs hintereinander, und die dritte sowie die vierte Gehäuseöffnung sind dazu winklig, insbesondere im Wesentlichen rechtwinklig, angeordnet. Somit sind bevorzugt bei montierter Informationsvorrichtung am Zielfernrohr die erste Gehäuseöffnung und die zweite Gehäuseöffnung in Richtung der optischen Achse des Zielfernrohrs hintereinander und die dritte Gehäuseöffnung oberhalb der optischen Achse des Zielfernrohrs und die vierte Gehäuseöffnung unterhalb der optischen Achse des Zielfernrohrs angeordnet. Weiter bevorzugt sind an der dritten Gehäuseöffnung das Kameramodul und an der vierten Gehäuseöffnung das Projektionsmodul angeordnet. Die Umlenkeinrichtung zur Bildumlenkung ist vorteilhafterweise so im Gehäuse angeordnet, dass das entlang der optischen Achse der Optikeinrichtung durch die erste Gehäuseöffnung eintretende Bild aus der Optikeinrichtung durch die halbdurchlässige Umlenkeinrichtung zur Bildumlenkung über die zweite und die dritte Gehäuseöffnung aus dem Umlenkmodul weitergeleitet wird, wobei das durch die vierte Gehäuseöffnung eintretende Bild des Projektionsmoduls durch die halbdurchlässige Umlenkeinrichtung über die zweite und die dritte Gehäuseöffnung aus dem Umlenkmodul weitergeleitet wird. Dadurch sind für den Anwender sowohl das durch die Optikeinrichtung erfasste Bild als auch die Zusatzinformationen, welche vom Informationsbild des Projektionsmoduls bereitgestellt werden, ersichtlich. Bevorzugt überlagert das Informationsbild des Projektionsmoduls das durch die erste Gehäuseöffnung eintretende Bild in Randbereichen, so dass die Informationen, welche mittels des Projektionsmoduls bereitgestellt werden, zwar vom Anwender erfassbar sind, jedoch dessen Blick durch die Optikeinrichtung auf das Ziel nicht beeinträchtigen. Weiter bevorzugt erfasst das Kameramodul nicht nur das durch die erste Gehäuseöffnung aus der Optikeinrichtung eintretende Bild, sondern auch das durch die vierte Gehäuseöffnung eintretende Bild des Projektionsmoduls, so dass eine umfassende Dokumentation, insbesondere inklusive aller dem Anwender zur Verfügung stehenden Informationen, gewährleistet ist. Das Bild, das der Schütze sieht, das heißt das mit den vom Projektionsmodul ausgegebenen Zusatzinformationen überlagerte Bild, wird somit sowohl an das Auge des Schützen als auch durch die dritte Gehäuseöffnung an das Kameramodul aus dem Umlenkmodul weitergeleitet.

Die Umlenkeinrichtung kann zur Umlenkung einen halbdurchlässigen Spiegel oder eine halbdurchlässige Prismenanordnung aufweisen. Die Prismenanordnung kann dabei aus Teilprismen bestehen, die miteinander verklebt, verpresst oder durch Adhäsionskräfte verbunden sind.

Um das aus dem Okulartubus der Optikeinrichtung und das aus dem Projektionsmodul austretende Bild zur Aufnahme mittels des Kameramoduls entsprechend abzubilden und/oder anzupassen, kann eine Linseneinrichtung nach Art eines Objektivs entweder im Umlenkgehäuse vor oder nach der Umlenkeinrichtung zur Bildablenkung oder im Gehäuse des Kameramoduls vorgesehen sein.

Das Kameramodul selbst kann nach einer bevorzugten Ausgestaltung mindestens einen Bildsensor, insbesondere in Form eines CCD- oder CMOS-Chips aufweisen, der im Gehäuse des Kameramoduls angeordnet ist. Vorteilhaft ist es, wenn der Bildsensor zumindest 2.073.600 Bildpunkte aufweist, um ein Bild mit möglichst hoher Auflösung, nämlich bevorzugt zumindest in Full High Definition (Full HD) mit 1.920 x 1.080 Bildpunkten, aufnehmen und/oder weiterleiten zu können. Die Bilder können dabei als Einzelbilder oder Videos aufgezeichnet und gegebenenfalls bereits aus den RAW-Daten in JPEGs, PNGs oder ein anderes gängiges Bilddateiformat vorverarbeitet werden. Es ist denkbar, dass der Bildsensor und das Datenmodul auf einer gemeinsamen Platine angeordnet sind. Dadurch kann sich eine besonders kompakte Bauweise des Kameramoduls und insbesondere der Informationsvorrichtung ergeben.

Die Betätigung der Informationsvorrichtung kann über Betätigungselemente, wie zum Beispiel Betätigungsknöpfe, erfolgen, über die insbesondere die Kamera ein- und ausgeschaltet werden kann und/oder die Betriebsarten Video/Foto ausgewählt werden können und/oder die Betriebsarten Stumm/Ton ausgewählt werden können. Bevorzugt weist die Informationsvorrichtung drei Betätigungsknöpfe auf, wobei mit einem ersten Betätigungsknopf die Kamera ein- und ausgeschaltet werden kann, mit einem zweiten Betätigungsknopf zwischen den Betriebsarten Video und Foto gewählt werden kann und mit dem dritten Betätigungsknopf die Auflösung oder die Art der Bildübertragung, beispielsweise kabelgebunden (denkbar als HDMI-Streaming per HDMI-Kabel) oder kabellos (denkbar als WiFi-Streaming über kabellose Verbindung zu einem Netzwerk), ausgewählt werden kann.

Nach einer Ausgestaltung kann die Informationsvorrichtung über eine Fernbedienung oder eine entsprechende Anwendung auf beispielsweise einem Smartphone gesteuert werden. Weiter kann die Stromversorgung der Informationsvorrichtung durch ein externes Netzteil oder durch interne Batterien oder wiederaufladbare Akkus erfolgen.

Das Montagemodul, insbesondere die Montageschalen des Montagemoduls, können aus Kunststoff oder Metall bestehen. Bevorzugt ist das Montagemodul, insbesondere die Montageschalen, aus Metall, weiter bevorzugt aus Aluminium oder einer, insbesondere hochfesten, Aluminiumlegierung gefertigt. Um bei der Verwendung eines Montagemoduls aus Metall und/oder der Verwendung von Metallgehäusen für das Projektionsmodul und/oder das Kameramodul eine Kurzschlussbildung zuverlässig zu verhindern, sind nach einem weiteren Ausführungsbeispiel der Erfindung der Bildsensor, das Datenmodul sowie die Projektionseinrichtung des Projektionsmoduls auf einem Kunststoffträger aus elektrisch nicht leitendem Material angeordnet.

In einem weiteren Aspekt betrifft die Erfindung eine Kontrollvorrichtung zur Fernüberwachung zumindest einer erfindungsgemäßen Informationsvorrichtung nach einer beliebigen Ausführungsform der Erfindung, wobei die Kontrollvorrichtung eine Dateneinrichtung, eine Anzeigeeinrichtung und eine Eingabeeinrichtung aufweist, und wobei das vom Kameramodul der zumindest einen Informationsvorrichtung erfasste Bild auf der Anzeigeeinrichtung der Kontrollvorrichtung anzeigbar ist. Bevorzugt kann die Kontrollvorrichtung zur gleichzeitigen Überwachung einer Mehrzahl der erfindungsgemäßen Informationsvorrichtungen eingesetzt werden. Die Kontrollvorrichtung zur Fernüberwachung ist beabstandet von der Informationsvorrichtung, beispielsweise in einer Entfernung von zumindest 50 m bis 25.000 m, angeordnet. Es ist jedoch auch denkbar, dass, insbesondere wenn eine Datenübertragung über das Internet erfolgen kann, die Kontrollvorrichtung in beliebiger Entfernung von der Informationsvorrichtung einsetzbar ist. Mittels der Kontrollvorrichtung kann ein Nutzer der Kontrollvorrichtung, beispielsweise ein verantwortlicher Leiter einer Operation oder ein Ausbilder, auf das Bild, das dem Anwender der Informationsvorrichtung bei Blick durch das Okular der Optikeinrichtung zur Verfügung steht, zugreifen und somit den Anwender der Informationsvorrichtung, beispielsweise bei der Abgabe eines Schusses, überwachen. Die Dateneinrichtung der Kontrollvorrichtung dient zumindest dem Senden und dem Empfang von Daten, insbesondere von Bilddaten, der zumindest einen Informationsvorrichtung. Bevorzugt entspricht das empfangene Bild exakt dem Bild, dass auch der Anmelder der Informationsvorrichtung bei Blick durch die Informationsvorrichtung bzw. die Optikeinrichtung sieht. Dies ist bevorzugt das in das Okular des Zielfernrohrs einfallende Bild überlagert mit Zusatzinformationen, welche als Informationsbild vom Projektionsmodul ausgegeben und vom Umlenkmodul in die optische Achse der Optikeinrichtung gelenkt werden. Die Anzeigeeinrichtung der Kontrollvorrichtung kann beispielsweise ein Display oder Bildschirm sein, das oder der zur Anzeige eines Bildes, insbesondere einer Bildfolge, geeignet ist. Bevorzugt ist die Anzeigeeinrichtung zur Darstellung einer Auflösung mit zumindest Full High Definition, das heißt mit 1.920 x 1.080 Bildpunkten, eingerichtet. Mittels der Eingabeeinrichtung kann der Anwender der Kontrollvorrichtung die Kontrollvorrichtung bedienen und insbesondere Daten, beispielsweise Anweisungen per Tonsignal oder Chatnachricht, an den Anwender der Informationsvorrichtung senden, wobei dem Anwender der Informationsvorrichtung entsprechende Tonsignale mittels der Tonausgabeeinrichtung der Informationsvorrichtung bereitgestellt werden und Textnachrichten mittels des Projektionsmoduls direkt auf die optische Achse des Zielfernrohrs projiziert werden können, so dass die Textnachrichten dem Anwender der Informationsvorrichtung bei Durchsicht durch die Optikeinrichtung zur Verfügung stehen.

Insbesondere im Hinblick auf Sicherheitsanforderungen ist es vorteilhaft, wenn die Daten zwischen der zumindest einen Informationsvorrichtung und der Kontrollvorrichtung verschlüsselt ausgetauscht werden. Hierzu werden die Daten auf Seiten der Kontrollvorrichtung mittels der Dateneinrichtung verschlüsselt und entschlüsselt sowie auf Seiten der Informationsvorrichtung mittels des Datenmoduls verschlüsselt und entschlüsselt. Das heißt mit anderen Worten, dass ein Anwender der Kontrollvorrichtung über die Eingabeeinrichtung beispielsweise eine Textnachricht verfasst, diese in der Dateneinrichtung verschlüsselt und anschließend an die Informationsvorrichtung gesendet wird, wo diese Nachricht entschlüsselt und über das Projektionsmodul dem Anwender der Informationsvorrichtung bereitgestellt werden kann.

Weiter hat es sich als vorteilhaft erwiesen, dass die zumindest eine Informationsvorrichtung mittels der Kontrollvorrichtung fernbedienbar ist. Insbesondere ist das Steuerungsmodul, das dazu eingerichtet ist, zumindest die Anzeige des Projektionsmoduls zu steuern, fernsteuerbar, wodurch der Anwender der Kontrollvorrichtung in einfacher Art und Weise dem Anwender der Informationsvorrichtung Zusatzinformationen zur Verfügung stellen bzw. in dessen Sichtfeld einblenden kann. Zudem ist es denkbar, dass das Kameramodul anhand der Kontrollvorrichtung ferngesteuert wird, so dass der Anwender der Kontrollvorrichtung entscheiden kann, wann eine Aufnahme ausgelöst wird, welche Art von Aufnahme erfolgen soll und in welcher Qualität die Aufnahme ausgelöst wird.

In einem weiteren Aspekt betrifft die Erfindung ein Überwachungssystem, umfassend zumindest eine erfindungsgemäße Informationsvorrichtung und zumindest eine erfindungsgemäße Kontrollvorrichtung. Gemäß einer bevorzugten Ausführungsform umfasst das Überwachungssystem eine Kontrollvorrichtung und eine Mehrzahl an Informationsvorrichtungen, welche mittels der Kontrollvorrichtung fernüberwacht werden können.

Es versteht sich, dass die zuvor genannten und nachstehend noch zu erläuternden Ausführungsformen und Ausführungsbeispiele nicht nur einzeln, sondern auch in beliebiger Kombination miteinander ausbildbar sind, ohne den Umfang der vorliegenden Erfindung zu verlassen.

Ausführungsformen der Erfindung sind in den Zeichnungen schematisiert dargestellt und werden nachfolgend beispielhaft erläutert.

Es zeigen:
- **Fig. 1**: eine erfindungsgemäße Informationsvorrichtung angeordnet an einer Optikeinrichtung in perspektivischer Ansicht;
- **Fig. 2**: die erfindungsgemäße Informationsvorrichtung aus Fig. 1 ohne Montagemodul in perspektivischer Ansicht;
- **Fig. 3**: eine weitere perspektivische Ansicht der erfindungsgemäßen Informationsvorrichtung aus Fig. 2 ohne Montagemodul;
- **Fig. 4**: die erfindungsgemäße Informationsvorrichtung aus Fig. 2 in seitlicher Ansicht;
- **Fig. 5**: eine erfindungsgemäße Informationsvorrichtung in Explosionsdarstellung;
- **Fig. 6**: ein Funktionsschema einer erfindungsgemäßen Informationsvorrichtung;
- **Fig. 7**: eine erfindungsgemäße Informationsvorrichtung mit Reichweitenvergrößerungsmodul und Optikeinrichtung angeordnet an einer Schusswaffe; und
- **Fig. 8**: eine erfindungsgemäße Kontrollvorrichtung in perspektivischer Ansicht.

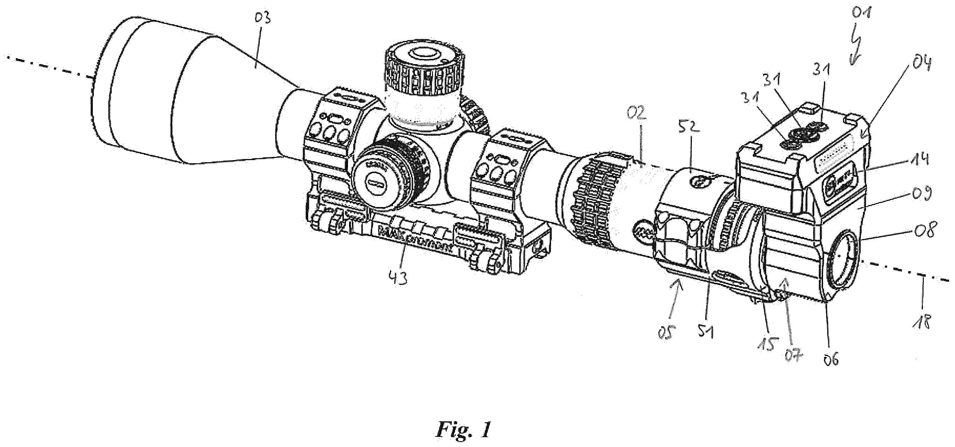

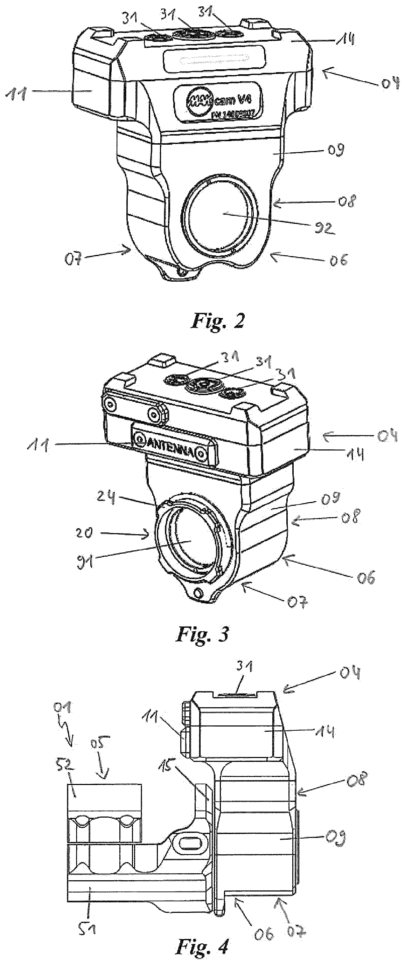

Eine Zusammenschau der **Figuren 1** bis **6** zeigt die Funktionsweise und den Aufbau der erfindungsgemäßen Informationsvorrichtung 01. In **Fig. 1** ist die als Zielfernrohr ausgebildete Optikeinrichtung 03, die mittels der Befestigungsvorrichtung 43 mit einer hier nicht dargestellten Schusswaffe 40 und mittels des Montagemoduls 05 mit der Informationsvorrichtung 01 verbindbar ist, dargestellt, wobei aus Gründen einer klareren Darstellung in den **Figuren 2** bis **5** die Optikeinrichtung 03 nicht dargestellt ist.

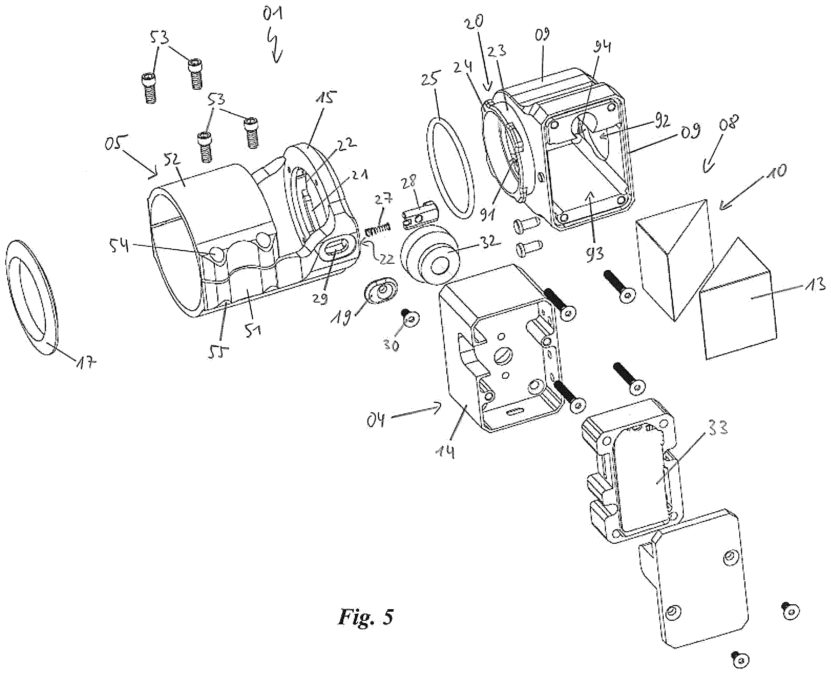

Es ist zu erkennen, dass die Informationsvorrichtung 01 mittels des Montagemoduls 05 am zum Anwender weisenden Ende des Okulartubus 02 angeordnet ist. Das Montagemodul 05 weist eine erste Montageschale 51 und eine zweite Montageschale 52 auf, wie insbesondere den Figuren 4 und 5 zu entnehmen ist. Die beiden Montageschalen 51 und 52 sind über eine Klemmeinrichtung miteinander verbunden, die vier Klemmschrauben 53 aufweist, die randseitig an der Montageschale 53 angeordnete Ausnehmungen 54 durchgreifen und in mit einem Innengewinde versehene Ausnehmungen 55 eingreifen. Im Bereich seines vom Zielfernrohr weg weisenden Endes ist das Montagemodul 05 mit einem Befestigungsring 15 versehen. Der Befestigungsring 15 ist einstückig an der Montageschale 51 angeformt und weist an seiner zum Zielfernrohr weisenden Seite eine Anschlagfläche 16 auf. Ein Zentrierring 17 ist zur Zentrierung des Montagemoduls 05 gegenüber der Optikeinrichtung 03, insbesondere gegenüber dem Okulartubus 02, vorgesehen und am zur Optikeinrichtung 03 weisenden Ende des Montagemoduls 05 angeordnet.

Gemäß dem dargestellten Ausführungsbeispiel weist die Montageschale 52 eine geringere Länge als die Montageschale 51 auf, so dass die Montageschale 51 in einem Abstand vom Befestigungsring 15 endet und ein Fenster zwischen den Montageschalen 51 und 52 sowie dem Befestigungsring 15 gebildet wird. Wird nun das Montagemodul 05 auf den Okulartubus 02 der Optikeinrichtung 03 bis zum Anschlag der konischen Fläche des Zentrierrings 17 am kragenseitigen Rand des Okulartubus 02 aufgesteckt, erfolgt durch den Eingriff der konischen Fläche in den Rand des Okulars eine selbsttätige Zentrierung bezüglich der optischen Achse 18 der Optikeinrichtung 03, vorliegend des Zielfernrohrs. Beim Anziehen der Klemmschrauben 53 werden die beiden Montageschalen 51 und 52 gegen den Okulartubus 02 geklemmt, so dass eine mechanisch feste Verbindung des Montagemoduls 05 mit dem Okulartubus 02 erfolgt. Da zwischen der Montageschale 52 und dem Befestigungsring 15 im Fenster keine Klemmkräfte übertragen werden, lässt sich eine gegebenenfalls in diesem Bereich kragenseitig am Rand des Okulartubus 02 angeordnete Dioptrienverstellung betätigen, ohne die Klemmung lösen zu müssen.

Der Befestigungsring 15 ist an seiner von der Anschlagfläche 16 weg weisenden Seite mit einer Befestigungseinrichtung in Form eines Bajonettverschlusses 20 zur Befestigung eines Umlenkmoduls 08 versehen. Der Bajonettverschluss 20 weist einen inneren Ring 21 mit vier Verriegelungsausnehmungen 22 auf, die in gleichen Winkelabständen am inneren Ring 21 ausgebildet sind. Das Gehäuse 09 des Umlenkmoduls 08 ist im Bereich seiner ersten Gehäuseöffnung 91 mit einem diese erste Gehäuseöffnung 91 umlaufenden Absatz 23 versehen, dessen Außendurchmesser geringfügig kleiner als der Innendurchmesser des inneren Rings 21 ist. Am Absatz 23 sind vier Verriegelungswarzen 24 vorgesehen, die in ihrer Anordnung den Verriegelungsausnehmungen 22 entsprechen. Zum Verbinden des Montagemoduls 05 und des Umlenkmoduls 08 wird das Umlenkmodul 08 mit seinen Verriegelungswarzen 24 in die Verriegelungsausnehmungen 22 gesteckt und verdreht, bis die Verriegelungswarzen 24 hinter den inneren Ring 21 gelangen. Die von der Optikeinrichtung 03 weg weisenden Flächen der Verriegelungswarzen 24 können dabei in Umfangsrichtung leicht steigend ausgebildet sein, so dass vor einem Verdrehen des Umlenkmoduls 08 gegenüber dem Montagemodul 05 eine selbsttätige spielfreie axiale Klemmung erfolgen kann. Weiter kann optional zur Abdichtung ein Dichtring 25 vorgesehen sein, der zwischen der Stirnseite des Absatzes 23 und der zugeordneten Fläche des Befestigungsrings 15 verpresst wird. Am Befestigungsring 15 ist weiter eine Arretiervorrichtung 26 vorgesehen. Diese Arretiervorrichtung 26 besteht aus einem Sicherheitsriegel 28, der vorgespannt durch eine Feder 27 in einer stirnseitig offenen Ausnehmung 29 im Befestigungsring 15 verschieblich gelagert ist. Durch eine Öffnung der Ausnehmung ist der Sicherheitsriegel 28 über eine Schraube 30 mit einem Betätigungselement in Form eines Betätigungsschiebers 19 verbunden. Aufgrund der Vorspannung durch die Feder 27 wird der Sicherheitsriegel 28 nach außen gedrückt und gelangt so bei montiertem Zustand des Umlenkmoduls 05 in Eingriff in dem Bereich zwischen zwei benachbarten Verriegelungswarzen 24, so dass ein Verdrehen und damit ein unbeabsichtigtes Lösen der Verbindung zwischen dem Montagemodul 05 und dem Umlenkmodul 08 nicht mehr möglich ist.

Das Gehäuse 09 des Umlenkmoduls 08 weist vier Gehäuseöffnungen 91, 92, 93 und 94 auf. Dabei liegen die Gehäuseöffnungen 91 und 92 bezüglich der optischen Achse der Optikeinrichtung 03, hier des Zielfernrohrs, hintereinander; die Gehäuseöffnungen 93 und 94 sind dazu rechtwinklig angeordnet. Insbesondere der **Fig. 1** ist zu entnehmen, dass im montierten Zustand der Informationsvorrichtung 01, das heißt wenn die Informationsvorrichtung 01 am Okulartubus 02 mittels des Montagemoduls 05 angeordnet ist, das Kameramodul 04 oberhalb der optischen Achse und das Projektionsmodul 06 mit dem Steuerungsmodul 07 unterhalb der optischen Achse angeordnet sind. Im Gehäuse 09 des Umlenkmoduls 08 ist eine Umlenkeinrichtung 10 angeordnet. Die Umlenkeinrichtung 10 weist eine Prismenanordnung 13 auf, wobei beispielsweise zwei Teilprismen entlang ihrer diagonalen Grenzflächen miteinander verbunden sind. Dabei wirken die Grenzflächen wie ein halbdurchlässiger Spiegel, so dass sowohl ein durch die Gehäuseöffnung 92 blickender Anwender der Informationsvorrichtung 01 das aus dem Okulartubus 03 und somit durch die Gehäuseöffnung 91 eintretende Bild sehen kann, als auch dieses Bild durch die Grenzflächeneffekte um 90° in Richtung der Gehäuseöffnung 93 und somit in Richtung des Kameramoduls 04 umgelenkt wird. Zudem kann der durch die Gehäuseöffnung 92 blickende Anwender neben dem aus dem Okulartubus 02 kommenden Bild auch das durch die Gehäuseöffnung 94 vom Projektionsmodul 06 erzeugte Informationsbild sehen, dass das aus dem Okulartubus 02 kommende Bild überlagert. Mit anderen Worten ist das Umlenkmodul 08 mit einer Umlenkeinrichtung 10 zur Umlenkung des Bildes aus der optischen Achse 18 der Optikeinrichtung 03 sowie zur Umlenkung des Informationsbildes des Projektionsmoduls 06 in die optische Achse 18 der Optikeinrichtung 03 versehen, wobei die Umlenkeinrichtung 10 zur Umlenkung halbdurchlässig ausgebildet und derart angeordnet ist, dass bei auf die Optikeinrichtung 03 aufgesetzter Informationsvorrichtung 01 der Durchblick durch die Optikeinrichtung 03, die Aufnahme eines Bildes und die Betrachtung des Informationsbildes bei Durchblick durch die Optikeinrichtung 03 möglich sind.

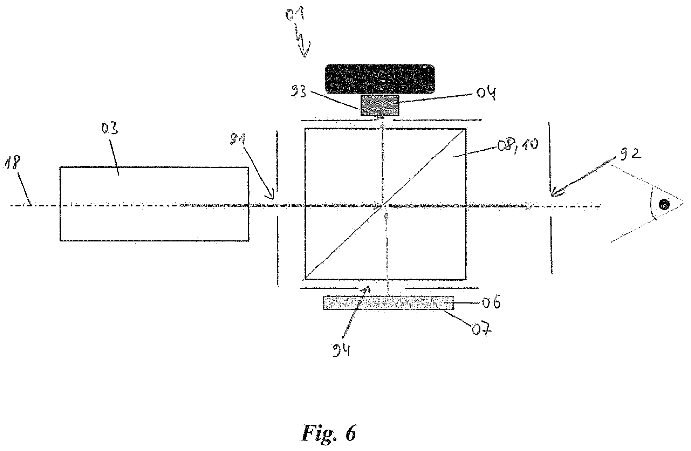

Das Kameragehäuse 14 des Kameramoduls 04 ist im Bereich der Gehäuseöffnung 93 an das Gehäuse 09 des Umlenkmoduls 08 mittels Befestigungsschrauben angeschraubt. Es ist jedoch auch denkbar, dass das Gehäuse 09 des Umlenkmoduls 08 und das Kameragehäuse 14 einstückig ausgebildet sind. Bei vorliegender Ausführungsform weisen das Projektionsmodul 06 und das Gehäuse 09 des Umlenkmoduls 08 ein einstückig ausgebildetes gemeinsames Gehäuse auf, wobei die vierte Gehäuseöffnung 94 des Gehäuses des Umlenkmoduls 08 zur Verbindung von Projektionsmodul 06 und Umlenkeinrichtung 10 innerhalb des gemeinsamen Gehäuses angeordnet und daher lediglich in Figur 6 ersichtlich ist.

Die Informationsvorrichtung 01 weist am Kameramodul 04 drei Betätigungsknöpfe 31 auf, wobei mit einem ersten Betätigungsknopf 31 das Kameramodul 04 ein- und ausgeschaltet werden kann, mit einem zweiten Betätigungsknopf 31 zwischen den Betriebsarten Video und Foto gewählt werden kann und mit dem dritten Betätigungsknopf 31 die Auflösung oder die Art der Bildübertragung ausgewählt werden kann. Im Kameragehäuse 14 ist eine Platine 33 angeordnet, die die wesentlichen elektrischen oder elektronischen Bauteile des Kameramoduls aufweist. Es ist denkbar, dass auf der Platine 33 auch das Datenmodul 11 angeordnet ist. Jedoch kann das Datenmodul 11 in einer alternativen Ausführung auch separat und unabhängig vom Kameramodul 04 ausgebildet sein. Der Bildsensor ist auf der zur Umlenkeinrichtung 10 weisenden Seite der Platine 33 angeordnet. Der Bildsensor und insbesondere die optische Achse des Bildsensors ist derart ausgerichtet, dass die optische Achse des Bildsensors die Grenzfläche der Teilprismen der Prismenanordnung 13 im Wesentlichen mittig schneidet. Um das an der Grenzfläche der Prismenanordnung 13 erscheinende Bild auf dem Bildsensor abzubilden, ist eine Linsenanordnung 32 zwischen Prismenanordnung 13 und Bildsensor vorgesehen. Die Linseneinrichtung 32 ist derart gegenüber dem Bildsensor angeordnet, dass die optischen Achsen der Linseneinrichtung 32 und des Bildsensors fluchten. Die Brennweite der Linseneinrichtung 32 ist so gewählt, dass das auf den Grenzflächen erscheinende Bild im Wesentlichen vollständig und mit ausreichender Schärfe auf dem Bildsensor abgebildet wird. Zudem kann auch zwischen Projektionsmodul 06 und Umlenkmodul 08 eine hier nicht ersichtliche weitere Linsenanordnung angeordnet sein, deren Brennweite so gewählt ist, dass das auf den Grenzflächen der Prismenanordnung erscheinende, durch das Projektionsmodul 06 erzeugte Informationsbild im Wesentlichen vollständig und mit ausreichender Schärfe dem Anwender beim Blick durch die Optikeinrichtung 03 und die Gehäuseöffnung 92 zur Verfügung gestellt wird.

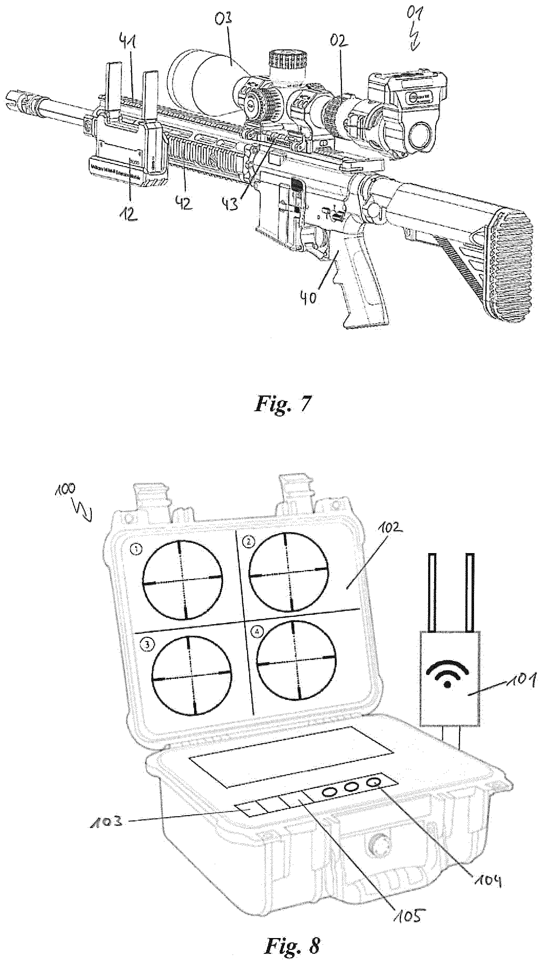

**Fig. 7** zeigt eine Informationsvorrichtung 01 gemäß voranstehend beschriebenem Ausführungsbeispiel, wobei die Informationsvorrichtung 01 am Okulartubus 02 einer Optikeinrichtung 03 angeordnet ist. Die Optikeinrichtung 03 ist mittels einer Befestigungsvorrichtung 43 an einer Laufschiene 41 einer Schusswaffe 40 angeordnet. An einer weiteren Laufschiene 42 ist ein Reichweitenvergrößerungsmodul 12 angeordnet, mittels dessen die von der Informationsvorrichtung 01, insbesondere dem Datenmodul 11 der Informationsvorrichtung 01, gesendeten Daten über eine relativ große Entfernung weitergeleitet werden können.

**Fig. 8** zeigt eine erfindungsgemäße Kontrollvorrichtung 100, die eine Dateneinrichtung 101, eine Anzeigeeinrichtung 102 und eine Eingabeeinrichtung 103 aufweist. Die Dateneinrichtung 101 ist zum Senden und Empfangen von Daten zumindest einer Informationsvorrichtung 01 ausgebildet. Die Anzeigeeinrichtung 102 dient der Darstellung der von einer Informationsvorrichtung 01 empfangenen Daten, insbesondere von Bilddaten, die exakt dem Bild entsprechen, das der Anwender der Informationsvorrichtung 01 sieht, wenn er durch die Gehäuseöffnung 92 der Informationsvorrichtung 01 und somit auch durch die Optikeinrichtung 03 blickt. Gemäß der Darstellung in **Fig. 8** werden mit der Kontrolleinrichtung 100 zumindest vier Informationsvorrichtungen 01 überwacht. Das Display der Anzeigeeinrichtung 102 ist dazu in vier gleich große Bereiche geteilt, wobei jeder Bereich das Bild einer Informationsvorrichtung 01 wiedergibt. Zur Steuerung der Kontrollvorrichtung 100 kann die Eingabeeinrichtung 103 genutzt werden. Weiter kann zur Kommunikation mit dem Anwender einer Informationsvorrichtung 01 der Toneingang 104 oder eine der Befehlstasten 105 der Eingabeeinrichtung 103 genutzt werden. Weiter kann die Eingabeeinrichtung 103 zur Fernsteuerung einer Informationsvorrichtung 01 durch den Bediener der Kontrollvorrichtung 100 genutzt werden. Somit können beispielsweise dem Anwender der Informationsvorrichtung 01 von einer entfernten Position nützliche Zusatzinformationen über das Projektionsmodul 06 durch den Anwender der Kontrollvorrichtung 100 bereitgestellt werden.

## Patentansprüche

1. Informationsvorrichtung (01) zur Befestigung am Okulartubus (02) einer Optikeinrichtung (03), insbesondere eines Zielfernrohrs, eines Fernrohrs oder eines Teleskops, umfassend zumindest ein Kameramodul (04) zur Aufnahme eines aus der optischen Achse (18) der Optikeinrichtung (03) umgelenkten Bildes und ein Montagemodul (05) zur Befestigung der Informationsvorrichtung (01) am Okulartubus (02),
**gekennzeichnet durch**
- ein Projektionsmodul (06) zur Ausgabe eines Informationsbildes,
- ein Steuerungsmodul (07), dazu eingerichtet, zumindest die Ausgabe des Projektionsmoduls (06) zu steuern,
- ein Umlenkmodul (08) mit einer in einem Gehäuse (09) angeordneten Umlenkeinrichtung (10) zur Umlenkung des Bildes aus der optischen Achse (18) der Optikeinrichtung (03) und zur Umlenkung des Informationsbildes des Projektionsmoduls (06) in die optische Achse (18) der Optikeinrichtung (03), wobei die Umlenkeinrichtung (10) zur Umlenkung halbdurchlässig so ausgebildet und angeordnet ist, dass bei auf die Optikeinrichtung (03) aufgesetzter Informationsvorrichtung (01) der Durchblick **durch** die Optikeinrichtung (03), die Aufnahme eines Bildes und/oder die Betrachtung des Informationsbildes ermöglicht ist.

2. Informationsvorrichtung nach Anspruch 1,
**dadurch gekennzeichnet,**
**dass** das Montagemodul (05), das Umlenkmodul (08), das Projektionsmodul (06), das Steuerungsmodul (07) und/oder das Kameramodul (04) lösbar miteinander verbunden sind.

3. Informationsvorrichtung nach Anspruch 1 oder 2,
**dadurch gekennzeichnet,**
**dass** das Montagemodul (05) einen doppelschaligen Aufbau mit zwei Montageschalen (51, 52) aufweist, wobei zwischen den beiden Montageschalen (51, 52) ein im Wesentlichen der Außenkontur des Okulartubus (02) entsprechender Raum gebildet wird, wobei beide Montageschalen (51, 52) mittels einer Klemmeinrichtung, den Okulartubus (03) zumindest abschnittsweise kraft- und/oder formschlüssig umschließend, gegeneinander klemmbar sind.

4. Informationsvorrichtung nach einem der Ansprüche 1 bis 3,
**dadurch gekennzeichnet,**
**dass** ein Datenmodul (11) zur Verarbeitung, zur Speicherung und/oder zum Austausch von Daten, insbesondere von Daten des Kameramoduls (04), umfasst ist.

5. Informationsvorrichtung nach Anspruch 4,
**dadurch gekennzeichnet,**
**dass** das Datenmodul (11) zur drahtlosen Übertragung von Daten ausgebildet ist.

6. Informationsvorrichtung nach einem der Ansprüche 1 bis 5,
**dadurch gekennzeichnet,**
**dass** ein Reichweitenvergrößerungsmodul (12) umfasst ist, mittels dessen die Übertragungsreichweite vergrößerbar ist.

7. Informationsvorrichtung nach einem der Ansprüche 1 bis 6,
**dadurch gekennzeichnet,**
**dass** eine Toneingabeeinrichtung und/oder eine Tonausgabeeinrichtung umfasst ist.

8. Informationsvorrichtung nach einem der Ansprüche 1 bis 7,
**dadurch gekennzeichnet,**
**dass** ein Beschleunigungssensor und/oder ein Gyroskop und/oder ein Positionssensor umfasst ist.

9. Informationsvorrichtung nach einem der Ansprüche 1 bis 8,
**dadurch gekennzeichnet,**
**dass** das Gehäuse (09) des Umlenkmoduls (08) eine erste Gehäuseöffnung (91), eine zweite Gehäuseöffnung (92), eine dritte Gehäuseöffnung (93) und eine vierte Gehäuseöffnung (94) aufweist, wobei die erste Gehäuseöffnung (91) und die zweite Gehäuseöffnung (92) in Richtung der optischen Achse (18) der Optikeinrichtung (03) hintereinander liegen und die dritte Gehäuseöffnung (93) und die vierte Gehäuseöffnung (94) dazu winklig, insbesondere im Wesentlichen rechtwinklig, angeordnet sind, und wobei die Umlenkeinrichtung (10) zur Bildumlenkung so im Gehäuse (09) des Umlenkmoduls (08) angeordnet ist, dass das entlang der optischen Achse (18) der Optikeinrichtung (03) durch die erste Gehäuseöffnung (91) eintretende Bild durch die halbdurchlässige Umlenkeinrichtung (10) zur Bildumlenkung über die zweite Gehäuseöffnung (92) und die dritte Gehäuseöffnung (93) aus dem Umlenkmodul (08) weitergeleitet wird, wobei das winklig, bevorzugt rechtwinklig, zur optischen Achse (18) der Optikeinrichtung (03) durch die vierte Gehäuseöffnung (94) eintretende Bild des Projektionsmoduls (06) durch die halbdurchlässige Umlenkeinrichtung (10) zur Bildumlenkung über die zweite Gehäuseöffnung (92) und die dritte Gehäuseöffnung (93) aus dem Umlenkmodul (08) weitergeleitet wird.

10. Informationsvorrichtung nach einem der Ansprüche 1 bis 9,
**dadurch gekennzeichnet,**
**dass** die Umlenkeinrichtung (10) zur Bildumlenkung einen halbdurchlässigen Spiegel oder eine halbdurchlässige Prismenanordnung (13) aufweist.

11. Informationsvorrichtung nach einem der Ansprüche 1 bis 10,
**dadurch gekennzeichnet,**
**dass** das Kameramodul (04) mindestens einen Bildsensor (34), insbesondere in Form eines CCD- oder CMOS-Chips, aufweist, der in einem Kameragehäuse (14) des Kameramoduls (04) angeordnet ist.

12. Informationsvorrichtung nach einem der Ansprüche 1 bis 11,
**dadurch gekennzeichnet,**
**dass** der mindestens eine Bildsensor (34) zumindest 2.073.600 Bildpunkte aufweist.

13. Kontrollvorrichtung (100) zur Fernüberwachung zumindest einer Informationsvorrichtung (01) nach einem der vorhergehenden Ansprüche, wobei die Kontrollvorrichtung (100) eine Dateneinrichtung (101), eine Anzeigeeinrichtung (102) und eine Eingabeeinrichtung (103) aufweist, und wobei das vom Kameramodul (04) der zumindest einen Informationsvorrichtung (01) erfasste Bild auf der Anzeigeeinrichtung (102) anzeigbar ist.

14. Kontrollvorrichtung nach Anspruch 13,
**dadurch gekennzeichnet,**
**dass** die zumindest eine Informationsvorrichtung (01) mittels der Kontrollvorrichtung (100) fernbedienbar ist.

15. Überwachungssystem umfassend zumindest eine Informationsvorrichtung (01) nach einem der Ansprüche 1 bis 12 und eine Kontrollvorrichtung (100) nach einem der Ansprüche 13 oder 14.
